# EUROPÄISCHE PATENTSCHRIFT

(11) **EP 2 919 637 B1**
(45) Veröffentlichungstag und Bekanntmachung des Hinweises auf die Patenterteilung: **13.09.2017**
(21) Anmeldenummer: 13783317.4
(22) Anmeldetag: 24.10.2013
(51) Int. Cl.: A47L 15/00, A47L 15/42

(54) **GESCHIRRSPÜLMASCHINE MIT EINER MEHRKAMMERIGEN SPEICHEREINRICHTUNG FÜR SPÜLFLOTTE**
DISHWASHER HAVING A MULTI-CHAMBER STORAGE MEANS FOR WASH LIQUOR
LAVE-VAISSELLE POURVU D'UN DISPOSITIF DE STOCKAGE À COMPARTIMENTS MULTIPLES POUR EAU DE RINÇAGE

(30) Priorität: 13.11.2012 DE 102012220616
(43) Veröffentlichungstag der Anmeldung: 23.09.2015
(73) Patentinhaber: BSH Hausgeräte GmbH, 81739 München (DE)
(72) Erfinder: HEISELE, Bernd, 89567 Sontheim (DE); LUGERT, Michael, 89343 Jettingen-Scheppach (DE); RIEGER, Roland, 73492 Rainau (DE)
(86) Internationale Anmeldenummer: PCT/EP2013/072273
(87) Internationale Veröffentlichungsnummer: WO 2014/075887

(56) Entgegenhaltungen:
- EP-A1- 2 524 642
- WO-A1-2011/015464

## Beschreibung

Die vorliegende Erfindung betrifft eine Geschirrspülmaschine, insbesondere Haushaltsgeschirrspülmaschine, mit einer Steuereinrichtung, bei der mindestens ein Spülprogramm zum Steuern eines Spülgangs zum Reinigen von Spülgut aufrufbar ist, wobei der Spülgang mehrere wasserführende Teilspülgänge umfasst, bei denen das Spülgut jeweils mit Spülflotte beaufschlagt ist, und mit einer Speichereinrichtung zum Speichern von bei dem Spülgang bereits zum Beaufschlagen von Spülgut verwendeter Spülflotte, um die gespeicherte Spülflotte in einem nachfolgenden Spülgang erneut zum Beaufschlagen von Spülgut zu verwenden.

Aus der Praxis ist eine Geschirrspülmaschine bekannt, bei der ein Teil der in einem Spülgang verwendeten Spülflotte in einer Speichereinrichtung gespeichert und in einem späteren Spülgang erneut verwendet wird. Auf diese Weise kann der Wasserbedarf für einen Spülgang verringert werden. Das Dokument WO 2011/015464 A1 offenbart eine solche Geschirrspülmaschine. Aufgabe der vorliegenden Erfindung ist es, eine Geschirrspülmaschine mit einer Speichereinrichtung für Spülflotte weiter zu verbessern.

Die Aufgabe wird bei einer Geschirrspülmaschine der eingangs genannten Art dadurch gelöst, dass bei wenigstens einem der Spülprogramme vorgesehen ist, die in einem letzten wasserführenden Teilspülgang des Spülgangs verwendete Spülflotte, zumindest teilweise in einer ersten Kammer der Speichereinrichtung und die in einem vorletzten wasserführenden Teilspülgang des Spülgangs verwendete Spülflotte zumindest teilweise in einer davon abgegrenzten zweiten Kammer der Speichereinrichtung zu speichern. EP 2 524 642 A1 offenbart eine solche Geschirrspülmaschine. Diese Offenbarung gehört aber zum Stand der Technik gemäß Artikel 54(3) EPÜ und ist nur zur Neuheit zu betrachten. Der Gegenstand des Anspruchs 1 unterscheidet sich von der Offenbarung dieses Dokuments durch das letzte Merkmal des Anspruchs, das eine Reinigungssequenz für die Speichereinrichtung definiert. Bei der erfindungsgemäßen Geschirrspülmaschine kann das Spülgut, insbesondere zu spülendes Geschirr und/oder Besteck, in einen Behandlungsraum, auch Spülkammer genannt, eingebracht und in einem Spülprozess, der auch Spülgang genannt wird, unter Zuhilfenahme von Spülflotte gereinigt und anschließend getrocknet werden.

Dabei wird unter einer Spülflotte, auch Spülflüssigkeit genannt, eine Flüssigkeit verstanden, welche dazu vorgesehen ist, auf das Spülgut aufgebracht zu werden, um dieses zu reinigen und/oder in anderer Weise zu behandeln. Eine Spülflüssigkeit enthält in aller Regel zu einem überwiegenden Teil Wasser. Dabei kann die Spülflotte je nach Betriebsphase der Geschirrspülmaschine mit Reinigungsmitteln, mit Reinigungshilfsmitteln, wie beispielsweise Klarspülmittel, und/oder mit Schmutz, der vom Spülgut gelöst wurde, angereichert sein.

Die erfindungsgemäße Geschirrspülmaschine weist eine Steuereinrichtung zur automatischen Steuerung von Betriebsabläufen der Geschirrspülmaschine auf. Die Steuereinrichtung kann hierzu vorteilhafterweise als sogenannte Ablaufsteuerung, insbesondere als elektronische Ablaufsteuerung, ausgebildet sein. Sie führt Steuer- und/oder Regelungsvorgänge, d.h. allgemein ausgedrückt Kontrollvorgänge, zum Betrieb der erfindungsgemäßen Geschirrspülmaschine aus.

In der Steuereinrichtung ist wenigstens ein Spülprogramm zum Steuern und/oder Regeln, d.h. verallgemeinert ausgedrückt Kontrollieren eines Spülgangs zum Spülen von Spülgut, insbesondere zum Spülen von Geschirr und/oder Besteck, hinterlegt. Vorteilhafterweise sind dabei mehrere Spülprogramme vorgesehen, von denen jeweils eines durch den Bediener ausgewählt und gestartet werden kann. Hierdurch ist es möglich, den Ablauf eines Spülgangs, insbesondere an die Beladungsmenge, an die Beladungsart, an den Verschmutzungsgrad des Spülgutes, und/oder an die gewünschte Dauer des Spülgangs anzupassen.

Die Steuereinrichtung ist so ausgebildet, dass insbesondere ein Spülgang durchführbar ist, der vorzugsweise mehrere Teilspülgange zur Reinigung des Spülguts unter Zuhilfenahme von Spülflüssigkeit und einen Teilspülgang zum Trocknen des Spülguts umfasst.

Ein beispielhafter Ablauf eines derartigen Spülgangs sieht zur Reinigung des Spülguts mehrere Teilspülgänge, insbesondere in dieser Reihenfolge einen Vorspülgang zum Vorreinigen von Spülgut, einen Reinigungsgang zum gründlichen Reinigen von Spülgut, einen Zwischenspülgang zum Entfernen von verschmutzter Spülflotte vom Spülgut und einen Klarspülgang zur Vermeidung von Flecken am Spülgut und/oder zur Vorbereitung eines Trocknungsgangs vor, bei denen das Spülgut jeweils mit Spülflotte beaufschlagt wird. Diese Teilspülgänge werden daher als wasserführende Teilspülgänge bezeichnet. Weiterhin sieht der beispielhafte Ablauf einen sich an die wasserführenden Teilspülgänge anschließenden, vorzugsweise finalen Teilspülgang zum Trocknen des gereinigten Spülguts, nämlich einen Trocknungsgang, vor.

Der Vorspülgang dient im Beispiel vor allem dem Anweichen von Verschmutzungen am Spülgut, und/oder der Entfernung von gröberen Verschmutzungen vom Spülgut. Der Zweck des nachfolgenden Reinigungsgangs besteht darin, Verschmutzungen vollständig von dem Spülgut zu entfernen, wozu eine mit Reinigungsmittel versetzte Spülflüssigkeit verwendet werden kann. Der nun nach dem Reinigungsgang durchgeführte Zwischenspülgang dient insbesondere der Entfernung von Reinigungsmittelresten, welche am Spülgut anhaften. Der darauffolgende Klarspülgang ist insbesondere zur Vermeidung von Flecken auf dem Spülgut, welche durch gelöste Stoffe im Wasser, wie beispielsweise Salz und/oder Kalk, entstehen könnten, vorgesehen. Hierzu kann die Spülflüssigkeit während des Klarspülgangs mit Klarspülmittel versetzt werden. Eine weitere Aufgabe des Klarspülgangs besteht darin, den nachfolgenden Trocknungsgang vorzubereiten. Dazu kann das Spülgut während des Klarspülgangs auf eine hohe Temperatur aufgeheizt werden.

Üblicherweise wird zu Beginn eines wasserführenden Teilspülgangs eine vorgegebene Menge an Flüssigkeit in die Spülkammer eingebracht, um so eine Spülflotte für den jeweiligen Teilspülgang zu bilden. Diese Spülflotte des Teilspülgangs wird typischerweise am Ende des Teilspülgangs wieder aus der Spülkammer entfernt.

Erfindungsgemäß ist nun vorgesehen, bei wenigstens einem in der Steuereinrichtung hinterlegten Spülprogramm wenigstens einen Teil der bereits in einem Spülgang zum Beaufschlagen von Spülgut verwendeten Spülflotte in einer Speichereinrichtung zu speichern, um die gespeicherte Spülflotte in einem nachfolgenden Spülgang erneut zum Beaufschlagen von Spülgut zu verwenden.

Dabei ist bei wenigstens einem der Spülprogramme vorgesehen, die in dem letzten wasserführenden Teilspülgang des Spülgangs verwendete Spülflotte und die in dem vorletzten wasserführenden Teilspülgang des Spülgangs verwendete Spülflotte jeweils zumindest teilweise zu speichern und erneut zu verwenden. Indem nun Spülflotten zweier wasserführender Teilspülgänge gespeichert werden, kann der Bedarf an von außen aufgenommenem Zulaufwasser besonders stark reduziert werden. Die so gespeicherten Spülflotten des letzten sowie vorletzten Teilspülgangs sind dabei verhältnismäßig gering mit vom Spülgut abgelösten Verschmutzungen belastet, da der Belastungsgrad der jeweiligen Spülflotte an Verschmutzungen allgemein im Verlauf eines Spülgangs abnimmt. Hierdurch wird einer Verschleppung von Verschmutzungen von einem ersten Spülgang in einen nachfolgenden, zweiten Spülgang wirksam entgegengewirkt, was das Reinigungsergebnis des nachfolgenden Spülgangs positiv beeinflusst.

Erfindungsgemäß ist dabei vorgesehen, die aus dem letzten wasserführenden Teilspülgang des Spülgangs stammende Spülflotte und die aus dem vorletzten wasserführenden Teilspülgang des Spülgangs stammende Spülflotte in voneinander abgegrenzten Kammern der Speichereinrichtung zu speichern. Eine Kammer ist dabei ein mit Spülflotte befüllbares abgegrenztes Volumen. Voneinander abgegrenzt sind die Kammern dann, wenn eine Vermischung der darin gespeicherten Spülflotten durch konstruktive Maßnahmen verhindert ist.

Dies ermöglicht, die in ihrer Zusammensetzung unterschiedlichen gespeicherten Spülflotten in einem unmittelbar oder mittelbar nachfolgenden Spülgang jeweils individuell wieder zu verwenden. Hierdurch wird eine flexiblere Gestaltung von Spülgängen durch entsprechende Spülprogramme möglich. Insbesondere können die beiden Spülflotten je nach Anforderung des Spülgangs gleichzeitig oder nacheinander wiederverwendet werden, wobei der unterschiedliche Gehalt der beiden Spülflotten an Reinigungsmitteln und/oder Klarspülmitteln dazu genutzt werden kann, das Reinigungsergebnis und/oder das Trocknungsergebnis des nachfolgenden Spülgangs zu verbessern.

Die Kammern können dasselbe Fassungsvermögen oder unterschiedliche Fassungsvermögen aufweisen, um diese optimal nutzen zu können.

Zweckmäßigerweise wird bei der erfindungsgemäßen Geschirrspülmaschine die Einrichtung zum Speichern von bereits verwendeter Spülflotte von Zeit zu Zeit, beispielsweise alle 10 oder 20 Spülgänge, gereinigt. Jede Kammer kann nun gereinigt werden, indem sie vorzugsweise vollständig mit beheizter Spülflotte gefüllt wird, welche dann wieder entnommen wird, oder in sonstiger Weise mit beheizter Spülflotte durchspült wird. Hierzu ist bei einer mehrkammerigen Speichereinrichtung weniger Spülflotte erforderlich als bei einer einkammerigen Speichereinrichtung mit vergleichbarem Gesamtfassungsvermögen, wenn die mehreren Kammern vorzugsweise zeitlich nacheinander mit derselben Spülbadmenge gereinigt werden. Denn die dabei verwendete Spülbadmenge ist aufgrund des geringeren Fassungsvolumens der jeweiligen, d.h. einzelnen Kammer der mehrkammerigen Speichereinrichtung geringer als die Spülbadmenge, die bei einer einkammerigen Speichereinrichtung mit nur einer einzigen Kammer, deren Füllvolumen der Summe der Volumina der mehreren Kammern einer mehrkammerigen Speichereinrichtung entspricht, zur Vollbefüllung erforderlich wäre.

Nach einer zweckmäßigen Weiterbildung der Erfindung ist der letzte wasserführende Teilspülgang des Spülgangs ein Klarspülgang. Auf diese Weise wird eine Spülflotte gespeichert, welche besonders wenig Verschmutzungen, aber einen hohen Anteil von Klarspülmitteln enthält. Hierdurch werden besonders wenige Verschmutzungen in den nachfolgenden Spülgang verschleppt. Gleichzeitig kann der hohe Anteil an Klarspülmitteln dazu genutzt werden, den Klarspülmittelanteil der Spülflotte im nachfolgenden Spülgang, insbesondere in dessen Klarspülgang, zu erhöhen, was den Glanz des dann gespülten Spülguts und das Trocknungsergebnis verbessern kann.

Gemäß einer vorteilhaften Weiterbildung der Erfindung ist der vorletzte wasserführende Teilspülgang des Spülgangs ein Zwischenspülgang und/oder ein Reinigungsgang. Hierdurch wird eine Spülflotte gespeichert, welche wenig Verschmutzungen und einen besonders geringen Anteil an Klarspülmittel enthält. Hierdurch werden besonders wenige Verschmutzungen in den nachfolgenden Spülgang verschleppt. Gleichzeitig kann die so gespeicherte Spülflotte auch problemlos in Teilspülgängen mit geringer Temperatur eines nachfolgenden Spülgangs, wie z.B. beim Vorspülgang, bei dem die Spülflotte üblicherweise unbeheizt bleibt, eines nachfolgenden Spülgangs wiederverwendet werden, da ein durch Klarspülmittel bewirktes und unerwünschtes Kaltschäumen verhindert wird. "Kaltschäumen" ist der Effekt, dass Klarspülmittel bei einer zu niedrigen Temperatur zu einem übermäßigen Schäumen der Spülflotte führen kann.

Gemäß einer vorteilhaften Weiterbildung der Erfindung ist bei wenigstens einem der Spülprogramme vorgesehen, in dem nachfolgenden Spülgang die in der zweiten Kammer gespeicherte Spülflotte in dem ersten wasserführenden Teilspülgang des nachfolgenden Spülgangs zum Beaufschlagen von Spülgut und die in der ersten Kammer gespeicherte Spülflotte in einem späteren Teilspülgang der wasserführenden Teilspülgänge des nachfolgenden Spülgangs zum Beaufschlagen von Spülgut zu verwenden. Hierdurch wird die stärker verschmutzte aus dem vorletzten Teilspülgang stammende Spülflotte in einer frühen Phase des nachfolgenden Spülgangs verwendet, in dem das Spülgut noch stark verschmutzt ist, so dass sich die stärkere Verschmutzung der wiederverwendeten Spülflotte des vorletzten Teilspülgangs nicht negativ auf das Spülergebnis auswirkt. Demgegenüber wird die sauberere aus dem letzten Teilspülgang stammende Spülflotte in einer späteren Phase des nachfolgenden Spülgangs verwendet, in dem das Spülgut bereits weniger verschmutzt ist, so dass eine Rückanschmutzung verhindert ist. Zudem kann so, falls der letzte Teilspülgang des Spülgangs ein Klarspülgang ist, ein Teil des in der aus dem letzten Spülgang stammenden Spülflotte enthaltenen Klarspülmittels in den Klarspülgang des nachfolgenden Spülgangs verschleppt werden, was zu einer Erhöhung der Klarspülmittelkonzentration führen kann und so das Glanz- und/oder Trocknungsergebnis verbessern kann. Unter "Verschleppen von Klarspülmittel" wird der Effekt verstanden, dass selbst bei einem zwischen zwei Teilspülgängen durchgeführten Wechsel der Spülflotte Klarspülmittel von dem ersten Teilspülgang in den zweiten Teilspülgang gelangen kann.

Nach einer zweckmäßigen Weiterbildung der Erfindung ist vorgesehen, dass der erste wasserführende Teilspülgang des nachfolgenden Spülgangs ein Vorspülgang und/oder ein Reinigungsgang ist, und dass der spätere der wasserführenden Teilspülgänge des späteren Spülgangs ein Reinigungsgang und/oder ein Zwischenspülgang ist. Gerade in einem Vorspülgang oder auch in einem Reinigungsgang machen sich die relativ hohen Schmutzanteile der aus dem vorletzten Teilspülgang stammenden Spülflotte auf Grund der starken Verschmutzung des Spülguts wenig bemerkbar. Wird die aus dem letzten Spülgang stammende Spülflotte in einem Reinigungsgang verwendet, so wird die Gefahr ausgeschlossen, dass durch ggf. darin enthaltene Klarspülmittelanteile ein übermäßiges Kaltschäumen auftritt, da der Reinigungsgang in aller Regel bei einer hinreichend hohen Temperatur durchgeführt wird, d.h. die Spülflotte für den Reinigungsgang wird üblicherweise aufgeheizt. Wird die aus dem letzten Spülgang stammende Spülflotte hingegen in einem Zwischenspülgang verwendet, so können ggf. darin enthaltene Klarspülmittelanteile besonders gut in den Klarspülgang des nachfolgenden Spülgangs verschleppt werden.

Gemäß einer vorteilhaften Weiterbildung der Erfindung ist bei wenigstens einem der Spülprogramme vorgesehen, die in der ersten Kammer gespeicherte Spülflotte und die in der zweiten Kammer gespeicherte Spülflotte in einem ersten wasserführenden Teilspülgang des nachfolgenden Spülgangs zum Beaufschlagen von Spülgut zu verwenden. Hierdurch wird ein besonders gutes Reinigungsergebnis erzielt, weil die gesamte gespeicherte Spülflotte so zum frühestmöglichen Zeitpunkt im nachfolgenden Spülgang verwendet wird, wo sich in der gespeicherten Spülflotte enthaltene Verschmutzungen am wenigsten bemerkbar machen.

Nach einer zweckmäßigen Weiterbildung der Erfindung ist der erste wasserführende Teilspülgang des Spülgangs ein Vorspülgang und/oder ein Reinigungsgang. Durch die gemeinsame Verwendung der in den beiden getrennten Kammern gespeicherten Spülflottenmengen, d.h. Spülbadmengen aus einem vorausgehenden Spülgang, mitteln sich darin enthaltene Verschmutzungen und/oder Klarspülmittelanteile aus, d.h. es kommt zu einer Verdünnung von Verschmutzungen und/oder Klarspülmittelanteilen in der aus beiden gespeicherten Teilspülbadmengen gebildeten Gesamtspülbadmenge, so dass in einem bei geringer Temperatur durchgeführten Vorspülgang kein unerwünschtes Kaltschäumen auftritt. Gleichzeitig ist der durchschnittliche Verschmutzungsanteil so gering, dass er in einem Vorspülgang und/oder Reinigungsgang nicht störend wirkt.

Gemäß einer vorteilhaften Weiterbildung der Erfindung sind eine Reinigungsmittelzugabeeinrichtung zum Versetzen von Spülflotte mit Reinigungsmittel und eine davon getrennte Klarspülmittelzugabeeinrichtung zum Versetzen von Spülflotte mit Klarspülmittel vorgesehen, wobei bei wenigstens einem der Spülprogramme vorgesehen ist, in dem nachfolgenden Spülgang, sofern die Klarspülmittelzugabeeinrichtung nicht betriebsbereit ist, die in der ersten Kammer gespeicherte Spülflotte in dem einem Klarspülgang unmittelbar vorangehenden Zwischenspülgang zum Beaufschlagen von Spülgut zu verwenden, und, sofern die Klarspülmittelzugabeeinrichtung betriebsbereit ist, die in der ersten Kammer gespeicherte Spülflotte in einem dem Zwischenspülgang vorangehenden Reinigungsgang zum Beaufschlagen von Spülgut zu verwenden. Betriebsbereit ist die Klarspülmittelzugabeeinrichtung dann, wenn sie bestimmungsgemäß mit Klarspülmittel beschickt ist und bestimmungsgemäß arbeitet. Sofern dies nicht zutrifft, kann ggf. eine Verbesserung des Glanz- und/oder Trocknungsergebnisses des nachfolgenden Spülgangs dadurch erreicht werden, dass die in der ersten Kammer gespeicherte Spülflotte (Spülbadmenge) in dem Zwischenspülgang, der dem Klarspülgang unmittelbar vorausgeht, verwendet wird, so dass in der Spülflotte der ersten Kammer enthaltenes Klarspülmittel gut in den Klarspülgang verschleppt wird. Sofern die Klarsspülmittelzugabeeinrichtung betriebsbereit ist, ist es nicht erforderlich, Klarspülmittel zu verschleppen. Hier ist es hingegen von Vorteil, wenn die Spülflotte der ersten Kammer zu einem möglichst frühen Zeitpunkt des nachfolgenden Spülgangs verwendet wird, um Verschleppungen von Verschmutzungen zu minimieren. Sie wird vorzugsweise dem Reinigungsgang des nachfolgenden Spülgangs zugeführt, weil beim Reinigungsgang vorzugsweise ein Aufheizen der Spülflotte auf eine solche Mindesttemperatur erfolgt, dass eine Schaumbildung weitgehend vermieden ist. Im Gegensatz dazu könnte es hingegen zu einer Schaumbildung beim Vorspülgang kommen, wenn dafür mit Klarspülmittel versetztes, kaltes Frischwasser - ohne Aufheizen - verwendet werden würde.

Nach einer zweckmäßigen Weiterbildung der Erfindung weist die Speichereinrichtung einen gemeinsamen Flottenspeicher für die erste Kammer und die zweite Kammer auf, wobei die erste Kammer und die zweite Kammer durch eine Trennwand des gemeinsamen Flottenspeichers getrennt sind. Auf diese Weise ergibt sich ein einfacher und kompakter Aufbau der Geschirrspülmaschine.

Gemäß einer vorteilhaften Weiterbildung der Erfindung ist der gemeinsame Flottenspeicher ein Spritzgussteil, insbesondere aus Kunststoff. Auf diese Weise ist der Flottenspeicher leicht herstellbar, auch wenn er komplex geformt ist, was auf Grund der beengten Platzverhältnisse in einer Geschirrspülmaschine erforderlich sein kann.

Nach einer zweckmäßigen Weiterbildung der Erfindung weist die Speichereinrichtung einen ersten Flottenspeicher mit der ersten Kammer und einen davon getrennten zweiten Flottenspeicher mit der zweiten Kammer auf. Hierdurch ist es möglich, voneinander beabstandete Bereiche in der Geschirrspülmaschine zum Speichern von Spülflotte zu verwenden.

Gemäß einer vorteilhaften Weiterbildung der Erfindung ist bei wenigstens einem der Spülprogramme eine optionale, manuell oder automatisch aktivierbare Reinigungssequenz vorgesehen, um die Speichereinrichtung mittels beheizter Spülflotte zu reinigen. Hierdurch kann eine für das Reinigungsergebnis und/oder die Funktionsfähigkeit der Geschirrspülmaschine nachteilige Schmutzansammlung in der Speichereinrichtung vermieden werden. Ebenso kann eine Gesundheitsgefährdung durch Keime verhindert werden. Die Spülflotte kann dabei beispielsweise auf wenigstens 70°C,bevorzugt auf wenigstens 80°C, besonders bevorzugt auf wenigstens 90°C aufgeheizt werden.

Unter Reinigungssequenz wird dabei im Rahmen der Erfindung insbesondere eine Reinigungsprozedur verstanden, die ein oder mehrere Reinigungsschritte umfassen kann. So kann die jeweilige Reinigungssequenz als Prozessschritte insbesondere das Einschalten der Umwälzpumpe und der Heizeinrichtung, ggf. Umstellen einer Wasserweiche zum Sperren der Sprüheinrichtungen der Geschirrspülmaschine, sowie das Öffnen der Sperrventilanordnung der Speichereinrichtung beinhalten.

Nach einer zweckmäßigen Weiterbildung der Erfindung ist bei der Reinigungssequenz vorgesehen, die erste Kammer und die zweite Kammer zeitlich nacheinander jeweils mit derselben Spülbadmenge zu reinigen. Hierdurch kann die Menge der zum Reinigen der Speichereinrichtung erforderlichen Menge an Spülflotte verringert werden, so dass auch eine geringere Energiemenge erforderlich ist, um diese auf die vorgesehene Temperatur zu bringen.

Gemäß einer vorteilhaften Weiterbildung der Erfindung ist bei der Reinigungssequenz vorgesehen, ausschließlich bereits zum Beaufschlagen von Spülgut verwendete Spülflotte zu nutzen. Hierdurch wird der Bedarf an extern aufgenommenem Zulaufwasser für die Geschirrspülmaschine gering gehalten. Alternativ kann es aus Hygienegründen besonders günstig sein, wenn für die Reinigungssequenz sauberes Frischwasser verwendet wird.

Weiterhin betrifft die Erfindung ein Verfahren zum Betreiben einer Geschirrspülmaschine, insbesondere Haushaltsgeschirrspülmaschine, bei dem von einer Steuereinrichtung mindestens ein Spülprogramm zum Steuern eines Spülgangs zum Reinigen von Spülgut aufgerufen wird, wobei der Spülgang mehrere wasserführende Teilspülgänge umfasst, bei denen das Spülgut jeweils mit Spülflotte beaufschlagt wird, wobei bei dem Spülgang bereits zum Beaufschlagen von Spülgut verwendete Spülflotte in einer Speichereinrichtung gespeichert wird, um die gespeicherte Spülflotte in einem nachfolgenden Spülgang erneut zum Beaufschlagen von Spülgut zu verwenden, wobei bei wenigstens einem der Spülprogramme die in dem letzten wasserführenden Teilspülgang des Spülgangs verwendete Spülflotte zumindest teilweise in einer ersten Kammer der Speichereinrichtung und die in einem vorletzten wasserführenden Teilspülgang des Spülgangs verwendete Spülflotte zumindest teilweise in einer zweiten Kammer der Speichereinrichtung gespeichert wird.

Vorteile, Aus- und Weiterbildungen des erfindungsgemäßen Verfahrens sind bei der Beschreibung der beanspruchten Geschirrspülmaschine erläutert.

Die vorstehend erläuterten und/oder in den Unteransprüchen wiedergegebenen vorteilhaften Aus- und Weiterbildungen der Erfindung können dabei - außer z. B. in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert. Es zeigen, jeweils in einer schematischen Prinzipskizze:
- **Figur 1**: ein vorteilhaftes Ausführungsbeispiel einer erfindungsgemäßen Haushaltsgeschirrspülmaschine in einer schematischen Seitenansicht,
- **Figur 2**: einen beispielhaften Betriebsablauf der erfindungsgemäßen Geschirrspülmaschine der Figur 1,
- **Figur 3**: einen weiteren beispielhaften Betriebsablauf der erfindungsgemäßen Geschirrspülmaschine der Figur 1, und
- **Figur 4**: einen dritten beispielhaften Betriebsablauf der erfindungsgemäßen Geschirrspülmaschine der Figur 1.

In den folgenden Figuren sind einander entsprechende Teile mit denselben Bezugszeichen versehen. Dabei sind nur diejenigen Bestandteile einer Geschirrspülmaschine mit Bezugszeichen versehen und erläutert, welche für das Verständnis der Erfindung erforderlich sind. Es versteht sich von selbst, dass die erfindungsgemäße Geschirrspülmaschine weitere Teile und Baugruppen umfassen kann.

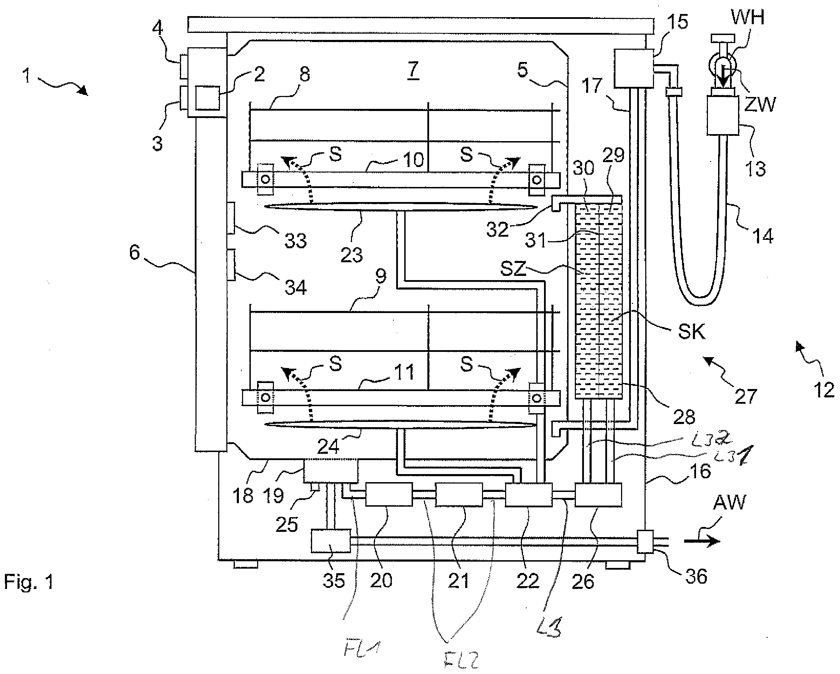

Figur 1 zeigt ein Ausführungsbeispiel einer erfindungsgemäßen Haushaltsgeschirrspülmaschine 1 in einer schematischen Seitenansicht. Die Geschirrspülmaschine 1 weist eine Steuereinrichtung 2 auf, in welcher wenigstens ein Spülprogramm zum Steuern und/oder Regeln, d.h. verallgemeinert ausgedrückt zum Kontrollieren, eines Spülgangs zum Spülen von Spülgut, insbesondere Geschirr und/oder Besteck, hinterlegt ist. Die Steuereinrichtung übt also die Funktion einer Kontrolleinrichtung oder logischen Ablaufeinrichtung aus. Zweckmäßigerweise sind dabei in ihr mehrere Spülprogramme gespeichert, so dass durch Auswahl eines geeigneten Spülprogramms der Ablauf eines durch die Steuereinrichtung 2 gesteuerten Spülgangs, beispielsweise an die Beladungsmenge, an die Beladungsart, an den Verschmutzungsgrad des Spülguts und/oder an die gewünschte Dauer des Spülgangs, angepasst werden kann. Das oder die Spülprogramme können dabei beispielsweise wenigstens einen Vorspülschritt, wenigstens einen Reinigungsschritt, wenigstens einen Zwischenspülschritt, wenigstens einen Klarspülschritt und/oder wenigstens einen Trocknungsschritt umfassen.

Der Steuereinrichtung 2 ist eine Bedieneinrichtung 3 zugeordnet, welche es einem Bediener der Geschirrspülmaschine 1 erlaubt, eines der Spülprogramme aufzurufen und dadurch zu starten. Weiterhin ist der Steuereinrichtung 2 eine Ausgabeeinrichtung 4 zugeordnet, welche die Ausgabe von Meldungen an den Bediener ermöglicht. Die Ausgabeeinrichtung 4 kann zur Ausgabe von optischen Meldungen Anzeigelampen, Leuchtdioden, eine alpha-numerische Anzeige, und/oder eine graphische Anzeige umfassen. Ferner kann die Ausgabeeinrichtung 4 zur Ausgabe von akustischen Meldungen einen Summer, einen Lautsprecher und/oder dergleichen aufweisen.

Die Geschirrspülmaschine 1 umfasst einen Spülbehälter 5, der durch eine Tür 6 verschließbar ist, so dass eine geschlossene Spülkammer 7 zum Spülen von Spülgut entsteht. In Figur 1 ist die Tür 6 in ihrer Geschlossenstellung gezeigt. Die Tür 6 ist durch Schwenken um eine senkrecht zur Zeichenebene angeordnete Achse in eine Offenstellung bringbar, in der sie im Wesentlichen waagerecht ausgerichtet ist und das Einbringen bzw. das Entnehmen von Spülgut ermöglicht. Im in Figur 1 gezeigten Ausführungsbeispiel ist die Bedieneinrichtung 3 in bedienungsfreundlicher Weise an einem oberen Abschnitt der Tür 6 angeordnet. Die Ausgabeeinrichtung 4 ist ebenfalls an dem oberen Abschnitt der Tür 6 angeordnet, so dass optische Meldungen gut sichtbar und akustische Meldungen gut hörbar sind. Auch die Steuereinrichtung 2 ist dort positioniert, so dass die erforderlichen Signalverbindungen zwischen der Bedieneinrichtung 3, der Ausgabeeinrichtung 4 und der Steuereinrichtung 2 kurz gehalten werden können. Prinzipiell ist es jedoch möglich, die Bedieneinrichtung 3, die Ausgabeeinrichtung 4 und/oder die Steuereinrichtung 2 an anderer Stelle anzuordnen. So kann es beispielsweise zweckmäßig sein, wenn die Steuereinrichtung in einer Bodenbaugruppe bzw. einem Basisträger unterhalb des Spülbehälters untergebracht ist. Die Steuereinrichtung 2 könnte ggf. auch dezentral ausgebildet sein, worunter verstanden wird, dass sie räumlich auseinanderliegende Komponenten umfasst, welche über Kommunikationsmittel derart verbunden sind, dass sie zusammenwirken können.

Die Geschirrspülmaschine 1 weist zum Positionieren von Geschirr einen oberen Geschirrkorb 8 und einen unteren Geschirrkorb 9 auf. Der obere Geschirrkorb 8 ist dabei an Ausfahrschienen 10 angeordnet, welche jeweils an einer Seitenwand des Spülbehälters 5 befestigt sind. Der Geschirrkorb 8 ist bei geöffneter Tür 6 mittels der Ausfahrschienen 10 aus dem Spülbehälter 5 ausfahrbar, was das Be- bzw. Entladen des oberen Geschirrkorbs 8 erleichtert. Der untere Geschirrkorb 9 ist in analoger Weise an Ausfahrschienen 11 angeordnet.

Weiterhin umfasst die Geschirrspülmaschine 1 eine schematisch dargestellte Wasserzulaufeinrichtung 12. Diese weist einen Wasserzulauf zur Aufnahme von Zulaufwasser bzw. Frischwaser ZW aus einer externen Wasserversorgung WH auf.

Dabei umfasst der Wasserzulauf ein Zulaufwasserventil 13, welches durch die Steuereinrichtung 2 steuerbar ist. Beispielsweise kann das Ventil 13 als Magnetventil ausgebildet sein. Die Eingangsseite des Ventils 13 ist so ausgebildet, dass es an einem Anschlussstück einer haushaltsüblichen Wasserversorgung WH, beispielsweise an einem Wasserhahn, befestigt werden kann. Die Verbindung kann mittels einer Schraubverbindung, einer Schnappverbindung oder dergleichen erfolgen. Derartige Ventile 13 sind auch unter dem Namen Aquastop-Ventil bekannt. Die Wasserzulaufeinrichtung 12 kann daher auch als Aquastop-Einrichtung bezeichnet werden.

Vorteilhafterweise ist das Ventil 13 geschlossen, wenn es nicht angesteuert ist, so dass die Geschirrspülmaschine 1 im ausgeschalteten Zustand von der Wasserversorgung WH getrennt ist. Auf diese Weise kann im Fehlerfall ein Austreten von Leckwasser aus der abgeschalteten Geschirrspülmaschine 1 vermieden werden.

Bestimmungsgemäß ist in Figur 1 die Eingangsseite des Wasserventils 13 an einen Wasserhahn WH angeschlossen. Die Ausgangsseite des Wasserventils 13 ist dabei mit einem Zulaufwasserschlauch 14 verbunden, wobei das stromabwärtige Ende des Zulaufwasserschlauchs 14 mit einer Eingangsseite eines Anschlussstücks 15 an einem Gehäuse 16 der Geschirrspülmaschine 1 verbunden ist. Mittels der Wasserzulaufeinrichtung 12 ist es folglich möglich, sauberes Zulaufwasser ZW bzw. Frischwasser von einer externen Wasserversorgung WH gesteuert in das Innere der Geschirrspülmaschine 1 zu leiten.

Der Zulaufwasserschlauch 14 kann als Sicherheitsschlauch mit einem inneren wasserführenden Druckschlauch und einem äußeren Hüllschlauch ausgebildet sein, wobei zwischen Druckschlauch und Hüllschlauch jeweils ein Leckwasserkanal zum Abführen von eventuell auftretendem Leckwasser vorgesehen sein kann. Dabei kann Leckwasser, welches während des Betriebs der Geschirrspülmaschine 1 im Bereich der Wasserzulaufeinrichtung 12 auftritt, über das gehäusefeste Anschlussstück 15 in das Innere der Geschirrspülmaschine 1 geleitet sein. Hier kann es von einem nicht gezeigten Leckwassersensor detektiert werden, so dass entsprechende Maßnahmen, etwa ein Schließen des Zulaufwasserventils 13, eingeleitet werden können.

Die Geschirrspülmaschine 1 weist weiterhin flüssigkeitsleitende Verbindungsmittel 17 auf, welche es ermöglichen, das aufgenommene Frischwasser ZW vom Ausgang des gehäusefesten Anschlussstücks 15 in die Spülkammer 7 zu leiten. Dabei kann vorgesehen sein, dass in die flüssigkeitsleitenden Verbindungsmittel 17 eine nicht dargestellte Wasseraufbereitungseinrichtung zum Aufbereiten des aufgenommenen Wassers ZW und/oder ein Wärmetauscher zum Vorwärmen des aufgenommenen Wassers ZW eingefügt ist, bevor dieses in die Spülkammer 7 gelangt.

An einem Boden 18 des Spülbehälters 5 ist ein Sammeltopf 19 ausgebildet, in dem sich in der Spülkammer 7 befindliche Spülflotte S aufgrund ihrer Schwerkraft sammelt. Der Sammeltopf 19 steht dabei über mindestens eine Flüssigkeitsleitung FL1 in Verbindung mit einer Umwälzpumpe 20, mit deren Hilfe Spülflotte S aus dem Sammeltopf 19 über eine Heizeinrichtung 21 zu einer Wasserweiche 22 gepumpt werden kann. Die Umwälzpumpe 20, die Heizeinrichtung 21 und die Wasserweiche 22 sind dabei über mindestens eine Flüssigkeitsleitung FL2 miteinander verbunden. Ggf. kann die Heizeinrichtung 21 in der Umwälzpumpe 20 untergebracht sein.

Die Umwälzpumpe 20, die Heizeinrichtung 21 und die Wasserweiche 23 werden während des Betriebs der Geschirrspülmaschine 1 durch die Steuereinrichtung 2 gesteuert.

Die Umwälzpumpe 20 weist bevorzugt einen bürstenlosen Elektromotor, bevorzugt einen bürstenlosen Permanentmagnetmotor auf, der als Gleichstrommotor, Wechselstrommotor oder Synchronmotor ausgebildet sein kann. Der Rotor eines bürstenlosen Permanentmagnetmotors umfasst wenigstens einen Permanentmagneten, der Stator hingegen mehrere Elektromagnete. Diese Elektromagnete werden über eine Ansteuerelektronik kommutiert. Über die Ansteuerelektronik kann die Drehrichtung des Permanentmagnetmotors eindeutig festgelegt werden, so dass die wasserführenden Teile der Umwälzpumpe 20 strömungstechnisch bezüglich einer vorgesehenen Drehrichtung optimiert werden können. Hierdurch ergibt sich eine hohe Förderleistung bei geringem Energieeinsatz. Zudem kann mittels der Ansteuerelektronik die Drehzahl des Motors und damit die Förderleistung der Umwälzpumpe 20 bedarfsgerecht gesteuert werden. Weiterhin kann der bürstenlose Permanentmagnetmotor als Nassläufer ausgebildet sein, so dass aufwendige Dichtungsmaßnahmen entfallen.

Die Heizeinrichtung 21 ist zum Beheizen von Spülflotte S vorgesehen und vorzugsweise als Durchlaufheizung 21 in der Flüssigkeitsleitung FL1, FL2 zwischen dem Sammeltopf 19 und der Wasserweiche 22 ausgebildet. Alternativ oder zusätzlich könnte auch ein offen angeordnetes Heizelement, beispielsweise ein in der Spülkammer 7 oder ein in dem Sammeltopf 19 angeordnetes Heizelement, vorgesehen sein.

Die Wasserweiche 22 ermöglicht eine gesteuerte Weiterleitung der von der Umwälzpumpe 20 zugeführten Spülflotte S. Sie weist im Ausführungsbeispiel drei Ausgänge auf, von denen ein erster mit einem oberen drehbaren Sprüharm 23 und ein zweiter mit einem unteren drehbaren Sprüharm 24 verbunden ist. Die Sprüharme 23 und 25 bilden in der Spülkammer 7 angeordnete Sprüheinrichtungen, welche eine Beaufschlagung von Spülgut mit Spülflotte S ermöglichen. Die Wasserweiche 22 ist so steuerbar, dass die von der Umwälzpumpe 22 geförderte Spülflotte S wahlweise durch keinen der Sprüharme 23, 24, nur durch einen der Sprüharme 23, 24, oder durch beide Sprüharme 23, 24 in die Spülkammer 7 gefördert ist.

Auf diese Weise ist bei entsprechender Ansteuerung der Wasserweiche 22 ein erster Umwälzkreislauf gebildet, bei dem Spülflotte S aus dem Sammeltopf 19 der Spülkammer 7 entnommen und über die Umwälzpumpe 20, die Heizeinrichtung 21, die Wasserweiche 22 und das Sprühsystem 23, 24 in den Sammeltopf 19 zurückgeführt werden kann. Der erste Umwälzkreislauf dient insbesondere dazu, das Spülgut mit aus den Sprüharmen 23, 24 austretender Spülflotte S, welche in Figur 1 mit gepunkteten Pfeilen dargestellt ist, zu beaufschlagen. Dabei kann die umgewälzte Spülflotte S gleichzeitig mittels der Heizeinrichtung 21 beheizt werden, wobei die Temperatur der Spülflotte S vorzugsweise mittels eines Temperatursensors 25 überwacht werden kann. Der Temperatursensor ist dabei mit der Steuereinrichtung 2 zur Übertragung von gemessenen Temperaturwerten verbunden. Hierdurch kann die Heizeinrichtung 21 bedarfsgerecht und insbesondere automatisch gesteuert werden. Insbesondere kann so die Temperatur der Spülflotte S während eines Teilspülgangs eines Spülgangs, bei dem Spülgut mit Spülflotte S beaufschlagt wird, auf die erforderliche Temperatur gebracht und gegebenenfalls auf dieser Temperatur gehalten werden.

Ein weiterer, d.h. hier dritter Ausgang der Wasserweiche 22 ist über einen Leitungsabschnitt L3 mit einer Sperrventilanordnung 26 verbunden, welche durch die Steuereinrichtung 2 steuerbar ist und seinerseits zwei Ausgänge aufweist, welche über separate Leitungsabschnitte L31, L32 mit den unteren Enden der getrennten Kammern 29, 30 einer Speichereinrichtung 27 zum Speichern von bereits verwendeter Spülflotte SK, SZ flüssigkeitsleitend verbunden sind. Es könnten aber auch weitere Ausgänge an der Wasserweiche 24 vorgesehen sein, beispielsweise um die Beschickung weiterer Sprüharme oder feststehender Sprühelemente zu ermöglichen.

Der mit der Sperrventilanordnung 26 verbundene, dritte Ausgang der Wasserweiche 22 kann zumindest zeitweise geöffnet sein. Auf diese Weise kann die Speichereinrichtung 27 bei geöffneter Sperrventilanordnung 26 mittels der eingeschalteten Umwälzpumpe 22 in deren Nennbetriebszustand mit Spülflotte S beschickt werden. Die in der Speichereinrichtung 27 befindliche Spülflotte SK, SZ kann dann in der Speichereinrichtung 27 durch Schließen der Sperrventilanordnung 26 gespeichert und durch erneutes Öffnen der Sperrventilanordnung 26 bei ausgeschalteter oder wesentlich langsamer als im Nennbetriebszustand drehender Umwälzpumpe über die Leitungsabschnitte L31, L32, L3 (in Gegenrichtung zur Einströmrichtung) aus der Speichereinrichtung 27 unter der Wirkung von Schwerkraft zurück in das an den Sammeltopf 20 angeschlossene Leitungssystem FL1, FL2 mit der Umwälzpumpe 20 und der Heizungseinrichtung 21 und/oder in den Sammeltopf 20 abgelassen werden.

Die Speichereinrichtung 27 weist einen Flottenspeicher 28 mit einer ersten Kammer 29 und einer zweiten Kammer 30 auf, welche durch eine Trennwand 31 voneinander getrennt sind. Dabei ist der erste Ausgang der Sperrventilanordnung 26 über den ersten Rohrleitungsabschnitt L31 mit der ersten Kammer 29 und der zweite Ausgang der Sperrventilanordnung 26 über den zweiten Rohrleitungsabschnitt L32 mit der zweiten Kammer 30 verbunden. Die Sperrventilanordnung 26 ist so ausgebildet, dass die erste Kammer 29 und die zweite Kammer 30 jeweils getrennt voneinander mit Spülflotte beschickbar und entleerbar sind. In Figur 1 ist die erste Kammer 29 mit Spülflotte SK und die zweite Kammer 30 mit Spülflotte SZ gefüllt.

Der Flottenspeicher 28 weist an einem oberen Ende einen Überlauf 32 auf. Wird mehr Spülflotte S in eine der beiden Kammern 29 und/oder 30 gepumpt, als diese fassen kann, so läuft die Spülflotte S durch den Überlauf 32 aus dem Flottenspeicher 28 heraus. Der Überlauf 32 ist mit der Spülkammer 7 flüssigkeitsleitend verbunden, so dass überlaufende Spülflotte S in die Spülkammer 7 gelangt und dort in den Sammeltopf 19 fließt.

Wenn also die Sperrventilanordnung 28 geöffnet ist, so kann Spülflotte S in einem zweiten Umwälzkreislauf umgewälzt werden, bei dem Spülflotte S aus dem Sammeltopf 19 entnommen und über die Umwälzpumpe 20, die Heizeinrichtung 21, die Wasserweiche 22, die Sperrventilanordnung 26 und den Flottenspeicher 28 in den Sammeltopf 19 zurückgeführt werden kann. Während des Betriebs dieses zweiten Umwälzkreislaufs ist der erste Umwälzkreislauf mit den Sprüheinrichtungen 23, 24 durch eine entsprechende Umstellung der Wasserweiche 22 stillgelegt.

Der zweite Umwälzkreislauf kann es insbesondere ermöglichen, beheizte Spülflotte umzuwälzen, so dass die Speichereinrichtung 27 gereinigt wird. Dabei kann ggf. eine nicht gezeigte Siebeinrichtung, beispielsweise im Sammeltopf 19, dazu dienen, Verschmutzungen aus der umgewälzten Spülflotte auszusieben.

Die Geschirrspülmaschine 1 kann weiterhin eine Reinigungsmittelzugabeeinrichtung 33 aufweisen, welche beispielweise an der Innenseite der Tür 6 angeordnet ist. Die Reinigungsmittelzugabeeinrichtung 33 ist durch die Steuereinrichtung 2 gesteuert und ermöglicht es, dass der Spülflotte S während eines Spülgangs automatisch Reinigungsmittel zugesetzt wird.

Die Geschirrspülmaschine 1 kann ebenso eine Klarspülmittelzugabeeinrichtung 34 aufweisen, welche ebenfalls beispielweise an der Innenseite der Tür 6 angeordnet sein kann. Die Klarspülmittelzugabeeinrichtung 34 ist ebenfalls durch die Steuereinrichtung 2 gesteuert und ermöglicht es, dass der Spülflotte S während eines Spülgangs automatisch Klarspülmittel zugesetzt wird.

Ferner kann eine Laugenpumpe 35 vorgesehen sein, mit der nicht mehr benötigte Spülflotte S als Abwasser AW über einen Abwasseranschluss 36 abgepumpt werden kann. Der Abwasseranschluss 36 kann mit einem nicht gezeigten Abwasserschlauch mit einer externen Abwasserentsorgungsanlage verbunden werden.

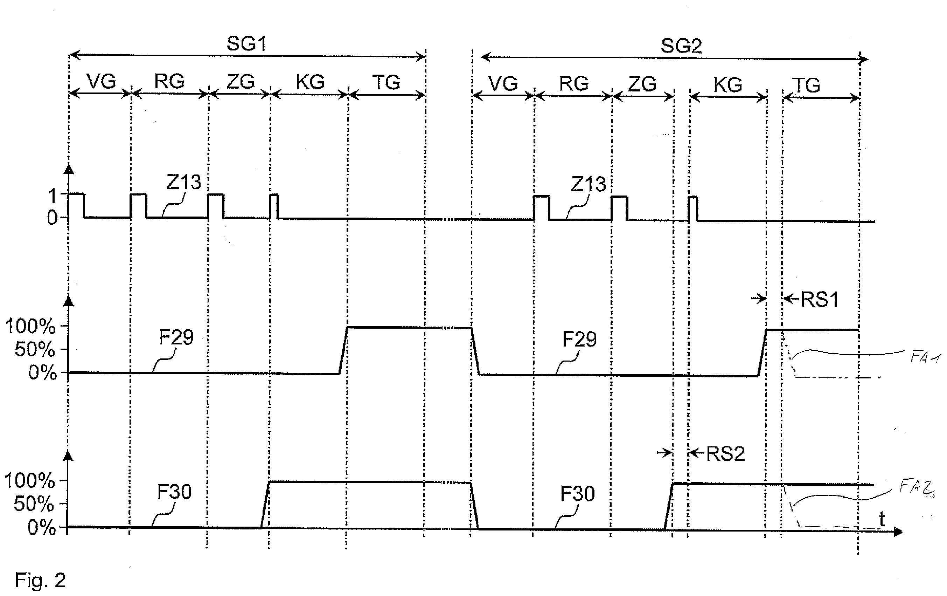

Figur 2 zeigt einen beispielhaften Betriebsablauf der erfindungsgemäßen Geschirrspülmaschine der Figur 1, wobei ein Spülgang SG1 eines ersten durchzuführenden Geschirrspülprogramms und ein Spülgang SG2 eines zweiten, zeitlich nachfolgenden Geschirrspülprogramms dargestellt sind. Dabei zeigen eine Kurve Z13 den Betriebszustand des Zulaufwasserventils 13, eine Kurve F29 den Füllzustand der ersten Kammer 29 und eine Kurve F30 den Füllzustand der zweiten Kammer 30 der Speichereinrichtung 27, jeweils auf einer gemeinsamen Zeitachse t.

Beim Spülgang SG1 handelt es sich beispielsweise um den ersten Spülgang nach Inbetriebnahme der Geschirrspülmaschine 1, wobei beide Kammern 29 und 30 leer sind. Zu Beginn des Vorspülgangs VG wird das Zulaufwasserventil 13 zeitweilig geöffnet, um Zulaufwasser ZW als Spülflotte S in die Spülkammer 7 zu füllen. Zum Ende des Vorspülgangs VG wird die verwendete Spülflotte S mittels der Laugenpumpe 35 abgepumpt. Dann wird zu Beginn des Reinigungsgangs RG erneut durch Öffnen des Zulaufwasserventil 13 Zulaufwasser ZW als Spülflotte S in die Spülkammer 7 gefüllt. Auch diese Spülflotte wird zu Ende des Reinigungsgangs RG mittels der Laugenpumpe 35 abgepumpt. Ebenso wird zu Beginn des Zwischenspülgangs ZG das Zulaufwasserventil 13 zeitweilig geöffnet, um Zulaufwasser ZW als Spülflotte S in die Spülkammer 7 zu füllen. Zum Ende des Zwischenspülgangs ZG wird die hier verwendete Spülflotte S jedoch nicht abgepumpt, sondern in die zweite Kammer 30 gepumpt, so dass diese gefüllt wird. Im nun nachfolgenden Klarspülgang KG wird zu Beginn ebenfalls erneut durch Öffnen des Zulaufwasserventil 13 Zulaufwasser ZW als Spülflotte S in die Spülkammer 7 gefüllt. Diese wird zu Ende des Klarspülgangs KG in die erste Kammer 29 gepumpt, so dass auch diese gefüllt wird. Im abschließenden Trocknungsgang TG wird hingegen keine Spülflotte verwendet. Im Ergebnis sind zu Ende des Spülgangs SG die erste Kammer 29 mit der im Klarspülgang KG verwendeten Spülflotte SK und die zweite Kammer 30 mit der im Zwischenspülgang ZG verwendeten Spülflotte SZ gefüllt.

Im Ausführungsbeispiel von Figur 2 werden im nachfolgenden Spülgang SG2 beide Kammern 29 und 30 zu Beginn des Vorspülgangs VG gleichzeitig geleert. Alternativ können sie auch zeitlich nacheinander in der Anfangsphase des Vorspülgangs VG geleert werden. In jedem Fall stehen somit die gespeicherten Spülflottenmengen aus den beiden Kammern 29, 30 als Gesamtflüssigkeitsmenge für die überwiegende Zeitdauer des Vorspülgangs VG des Spülgangs SG2 zur Verfügung. Diese Gesamtflüssigkeitsmenge aus den beiden Kammern 29, 30 kann für den Vorspülgang bereits ausreichend sein, so dass auf die Aufnahme von Zulaufwasser über das Zulaufwasserventil 13 verzichtet werden kann, wodurch sich eine signifikante Einsparung an Zulaufwasser ergibt. Andernfalls kann auch noch ein Anteil an Frischwasser aus der Wasserzulaufeinrichtung 12 der Spülflotte für den Vorspülgang zugemischt werden. Durch den Verschnitt benutzter Spülflotten aus dem Klarspülgang und dem Zwischenspülgang eines vorangegangenen Spülgangs ist die Gefahr einer Schaumbildung während des Vorspülgangs des nachfolgenden Spülgangs SG2 gegenüber dem Fall verringert, dass ausschließlich nur Spülflotte aus einem Vorratsspeicher mit gespeicherter Spülflotte aus dem Klarspülgang des vorausgehenden Spülgangs SG1 verwendet werden würde. Der weitere Ablauf des nachfolgenden Spülgangs SG2 entspricht prinzipiell dem Ablauf des Spülgangs SG1.

Figur 2 zeigt zusätzlich eine optional durchführbare Reinigungssequenz zur Reinigung der Speichereinrichtung 27, welche eine Teilreinigungssequenz RS1 zu Reinigung der ersten Kammer und eine Teilreinigungssequenz RS2 für die zweite Kammer 30 umfasst.

Bei der Teilreinigungssequenz RS1 wird beheizte Spülflotte SK des Klarspülgangs KG nach dessen Ende in die erste Kammer 29 gepumpt, bis diese überläuft und die Spülflotte SK im oben beschriebenen zweiten Umwälzkreislauf umgewälzt wird, wodurch die erste Kammer 29 gereinigt wird. Für ein Überlaufen der ersten Kammer 29 ist deren Füllvolumen zweckmäßigerweise kleiner als das Volumen der für den Klarspülgang KG verwendeten Spülflotte SK gewählt. Alternativ ist es selbstverständlich möglich, die erste Kammer 29 auch auf andere Art und Weise mit der für den Klarspülgang KG verwendeten Spülflotte SK durchzuspülen und zu reinigen. Gemäß dem Ausführungsbeispiel von Figur 2 wird nach dem Reinigen der ersten Kammer 29 die dazu benutzte Spülflotte SK in dieser zwischengespeichert, um in einem nachfolgenden Spülgang wiederverwendet zu werden. Alternativ kann die zur Reinigung der ersten Kammer 29 benutzte Spülflotte SK aus der Geschirrspülmaschine abgepumpt werden (, was in der Figur 2 nach dem Ablauf der Reinigungszeitdauer für die Teilreinigungssequenz RS1) durch einen strichpunktierten Flankenabfall FA1 der Kurve F29 auf 0% schematisch angedeutet ist).

Bei der Teilreinigungssequenz RS2 wird hingegen beheizte Spülflotte SZ des dem Klarspülgang KG vorausgehenden Zwischenspülgangs ZG nach dessen Ende vor Beginn des nachfolgenden Klarspülgangs in die zweite Kammer 30 gepumpt, bis nun diese überläuft und die Spülflotte SZ im oben beschriebenen zweiten Umwälzkreislauf umgewälzt wird, wodurch die zweite Kammer 30 gereinigt wird. Für ein Überlaufen der zweiten Kammer 30 ist deren Füllvolumen zweckmäßigerweise kleiner als das Volumen der Spülflotte SZ für den Zwischenspülgang ZG gewählt. Alternativ ist es selbstverständlich möglich, die zweite Kammer 30 auch auf andere Art und Weise mit der für den Zwischenspülgang ZG verwendeten Spülflotte SZ durchzuspülen und zu reinigen. Gemäß dem Ausführungsbeispiel von Figur 2 wird nach dem Reinigen der zweiten Kammer 30 die dazu benutzte Spülflotte SZ in dieser zwischengespeichert, um in einem nachfolgenden Spülgang wiederverwendet zu werden. Alternativ kann die zur Reinigung der zweiten Kammer 30 benutzte Spülflotte SZ aus der Geschirrspülmaschine abgepumpt werden(, was in der Figur 2 nach dem Ablauf der Reinigungszeitdauer für die Teilreinigungssequenz RS2) durch einen strichpunktierten Flankenabfall FA2 der Kurve F29 auf 0% schematisch angedeutet ist).

Verallgemeinert betrachtet werden also die beiden Kammern 29, 30 der Speichereinrichtung 27 sequentiell, d.h. zeitlich nacheinander gereinigt und dabei jeweils lediglich bereits benutzte Spülflotte verwendet.

Die beiden Kammern 29, 30 können nach einer weiteren vorteilhaften Abwandlung vorzugsweise mit derselben Spülflotte, insbesondere aus dem Zwischenspülgang eines Geschirrspülprogramms, zeitlich nacheinander durchspült und gereinigt werden. Die Spülflotte des Zwischenspülgangs ist üblicherweise sauberer als die Spülflotte des vorausgehenden Reinigungsgangs, so dass wegen der geringeren Belastung der Spülflotte des Zwischenspülgangs mit Schmutzteilchen eine verbesserte Reinigung der beiden Kammern 29, 30 möglich ist.

Zur Erreichung einer einwandfreien Reinigung der beiden Kammern 29, 30 kann es nach einer weiteren vorteilhaften Abwandlung insbesondere zweckmäßig sein, wenn die beiden Teilreinigungssequenzen RS1, RS2 zeitlich nacheinander mit derselben Spülbadmenge an Frischwasser bzw. Zulaufwasser ZW durchgeführt werden, das beim Zirkulieren durch den zweiten Umwälzkreislauf mittels der Heizeinrichtung 21 auf eine gewünschte Reinigungstemperatur aufgeheizt wird. Es wird über die Wasserzulaufeinrichtung 12 insbesondere eine solche Spülbadmenge an Frischwasser in den Sammeltopf 19 eingelassen, die für eine Vollbefüllung der jeweiligen Kammer 29, 30 und deren Überlauf bei Nennbetrieb der Umwälzpumpe gerade ausreicht. Diese Spülbadmenge wird dann nach ihrer Erwärmung sowohl für die Reinigung der ersten Kammer 29 als auch zugleich für die Reinigung der zweiten Kammer 30 verwendet. Dies ist wasser- und zugleich energiesparend, da mit derselben erwärmten Spülbadmenge an Frischwasser ZW beide Kammern nacheinander gesäubert werden. Eine solche Reinigung der beiden Kammern 29, 30 mit derselben Frischwassermenge kann vorzugsweise am Ende des Vorspülgangs RG vor Durchführung des Reinigungsgangs eines Spülgangs erfolgen, bevor Spülflotte SZ im dem Reinigungsgang nachfolgenden Zwischenspülgang ZG in die zweite Kammer 30 zwischengespeichert wird und bevor Spülflotte SK im später nachfolgenden Klarspülgang KG in der ersten Kammer 29 zwischengespeichert wird. Dies hat den energetischen Vorteil, dass die Wärmeenergie, die im zweiten Umwälzkreislauf von der Heizeinrichtung 21 zum Aufheizen der Spülflotte, die zur Reinigung der beiden Kammern benötigt wird, aufgebracht wird und zum Erwärmen der Komponenten des zweiten Umwälzkreislaufs und damit einhergehend zur Erwärmung des Innenraums des Spülbehälters führt, teilweise auch die Spülflotte des nachfolgenden Reinigungsgangs RG erwärmt.

Die Reinigung der beiden Kammern wird zweckmäßigerweise nur von Zeit zu Zeit, insbesondere nach jedem 7. bis 15. Spülgang, durchgeführt. Dadurch können die Kammern ausreichend hygienisch gehalten werden.

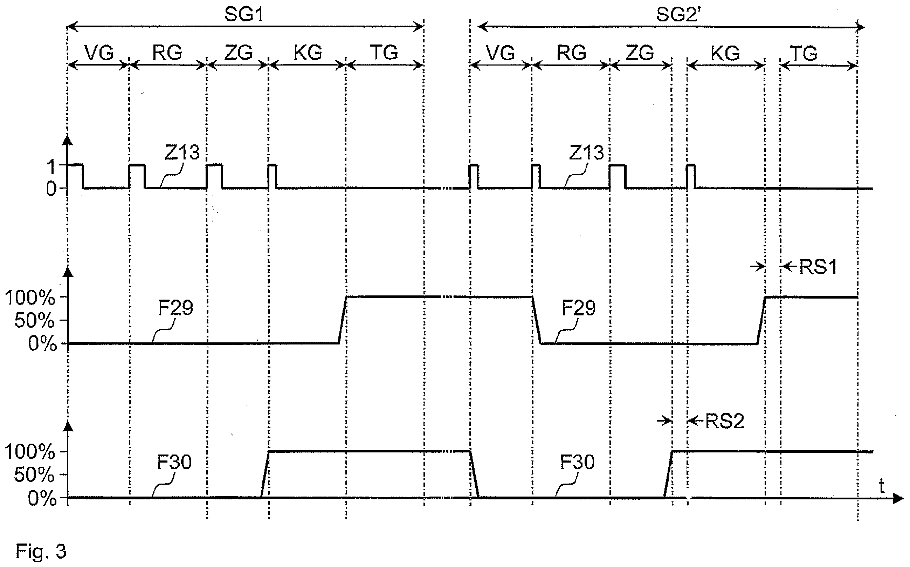

Figur 3 zeigt einen abgewandelten Betriebsablauf der Geschirrspülmaschine 1, der sich vom in Figur 2 gezeigten Betriebsablauf dadurch unterscheidet, dass zu Beginn des Vorspülgangs VG des nachfolgenden Spülgangs SG2' lediglich die zweite Kammer 30 geleert wird, die Spülflotte aus dem Zwischenspülgang ZG des vorausgehenden Spülgangs SG1 enthält. Die erste Kammer 29, die Spülflotte aus dem Klarspülgang KG des vorausgehenden Spülgangs SG1 enthält, wird hingegen zu Beginn des Reinigungsgangs RG des nachfolgenden Spülgangs SG2' geleert.

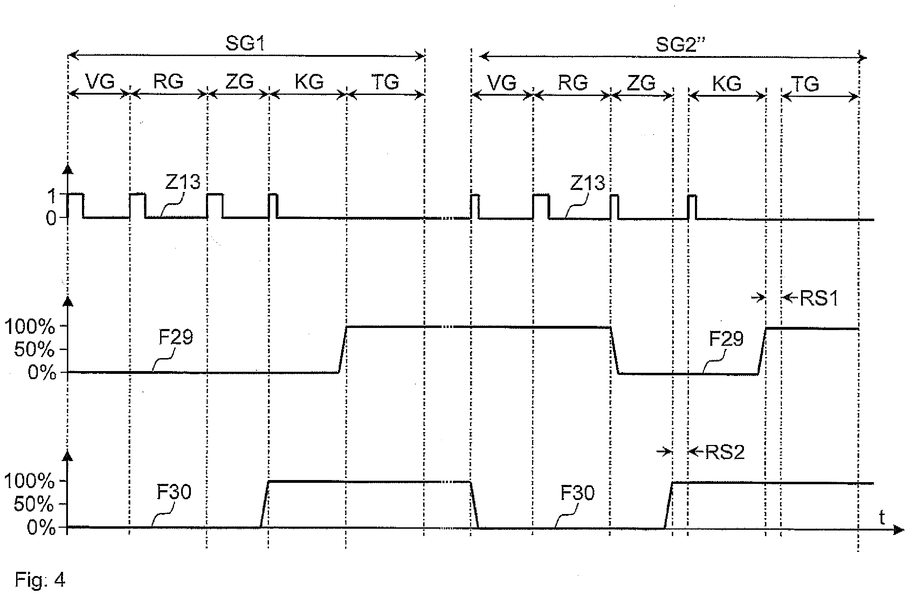

Figur 4 zeigt einen weiteren abgewandelten Betriebsablauf der Geschirrspülmaschine 1, der sich vom in Figur 3 gezeigten Betriebsablauf dadurch unterscheidet, dass die erste Kammer 29, die Spülflotte aus dem Klarspülgang KG des vorausgehenden Spülgangs SG1 enthält, zu Beginn des Zwischenspülgangs ZG des nachfolgenden Spülgangs SG2" geleert wird.

Es ergeben sich durch die 2-Kammertechnik insbesondere folgende Möglichkeiten:
Füllen:
   - Erste Kammer: z. B. mit Klarspülbadmenge und
   - Zweite Kammer: z. B. mit Zwischenspülbadmenge
Entleeren:
   - Beide Badmengen im Vorspülen, oder
   - Zweite Kammer im Vorspülen und erste Kammer im Zwischenspülen, oder
   - Zweite Kammer im Vorspülen und erste Kammer im Reinigen

Durch das Aufteilen der Speichereinrichtung 27 in 2 oder mehr Kammern 29, 30 können diese einzeln befüllt werden. Auch das Reinigen kann für jede Kammer 29, 30 nacheinander erfolgen. Somit wird nur eine geringe Menge Wasser und Energie benötigt. Durch Einsätze im Werkzeug können beispielsweise die Abtrennungen 31 auch entfernt oder Anschlüsse zum Befüllen verschlossen werden, damit die Anzahl der Kammern 29, 30 je nach Geräteauslegung variiert werden kann.

### Bezugszeichenliste

- 1: Geschirrspülmaschine
- 2: Steuereinrichtung
- 3: Bedieneinrichtung
- 4: Ausgabeeinrichtung
- 5: Spülbehälter
- 6: Tür
- 7: Spülkammer
- 8: oberer Geschirrkorb
- 9: unterer Geschirrkorb
- 10: Ausfahrschiene
- 11: Ausfahrschiene
- 12: Wasserzulaufeinrichtung
- 13: Zulaufwasserventil
- 14: Zulaufwasserschlauch
- 15: gehäusefestes Anschlussstück
- 16: Gehäuse
- 17: Verbindungsmittel
- 18: Boden des Spülbehälters
- 19: Sammeltopf
- 20: Umwälzpumpe
- 21: Heizeinrichtung
- 22: Wasserweiche
- 23: oberer Sprüharm
- 24: unterer Sprüharm
- 25: Temperatursensor
- 26: Sperrventilanordnung
- 27: Speichereinrichtung
- 28: Flottenspeicher
- 29: erste Kammer
- 30: zweite Kammer
- 31: Trennwand
- 32: Überlauf
- 33: Reinigungsmittelzugabeeinrichtung
- 34: Klarspülmittelzugabeeinrichtung
- 35: Laugenpumpe
- 36: Abwasseranschluss

- WH: Wasserversorgung, Wasserhahn
- ZW: Zulaufwasser
- S: Spülflotte beim Beaufschlagen von Spülgut
- SK: bereits im Klarspülgang zum Beaufschlagen von Spülgut verwendete Spülflotte
- SZ: bereits im Zwischenspülgang zum Beaufschlagen von Spülgut verwendete Spülflotte
- AW: Abwasser

- SG1: Spülgang
- SG2, SG2', SG2": nachfolgender Spülgang
- VG: Vorspülgang
- RG: Reinigungsgang
- ZG: Zwischenspülgang
- KG: Klarspülgang
- TG: Trocknungsgang
- Z13: Betriebszustand des Zulaufwasserventils
- F29: Füllzustand der ersten Kammer
- F30: Füllzustand der zweiten Kammer
- RS1: Teilreinigungssequenz für erste Kammer
- RS2: Teilreinigungssequenz für zweite Kammer
- FL1, FL2: Flüssigkeitsleitung
- L3, L31, L32: Leitungsabschnitte

## Patentansprüche

1. Geschirrspülmaschine, insbesondere Haushaltsgeschirrspülmaschine (1), mit einer Steuereinrichtung (2), bei der mindestens ein Spülprogramm zum Steuern eines Spülgangs (SG1, SG2) zum Reinigen von Spülgut aufrufbar ist, wobei der Spülgang (SG1, SG2) mehrere wasserführende Teilspülgänge (VG; RG, ZG, KG) umfasst, bei denen das Spülgut jeweils mit Spülflotte (S, SZ, SK) beaufschlagt ist, und mit einer Speichereinrichtung (27) zum Speichern von bei dem Spülgang (SG1, SG2) bereits zum Beaufschlagen von Spülgut verwendeter Spülflotte (SZ, SK), um die gespeicherte Spülflotte (SZ, SK) in einem nachfolgenden Spülgang (SG2) erneut zum Beaufschlagen von Spülgut zu verwenden, **dadurch gekennzeichnet, dass** bei wenigstens einem der Spülprogramme vorgesehen ist, die in einem letzten wasserführenden Teilspülgang (KG) des Spülgangs (SG1, SG2) verwendete Spülflotte (SK) zumindest teilweise in einer ersten Kammer (29) der Speichereinrichtung (27) und die in einem vorletzten wasserführenden Teilspülgang (ZG) des Spülgangs (SG1, SG2) verwendete Spülflotte (SZ) zumindest teilweise in einer davon abgegrenzten zweiten Kammer (30) der Speichereinrichtung (27) zu speichern und dass bei wenigstens einem der Spülprogramme eine optionale, manuell oder automatisch aktivierbare Reinigungssequenz (RS1, RS2) vorgesehen ist, um die Speichereinrichtung (27) mittels beheizter Spülflotte (SK, SZ) zu reinigen.

2. Geschirrspülmaschine nach vorstehendem Anspruch, dadurch gekennzeich-net, dass der letzte wasserführende Teilspülgang (KG) des Spülgangs (SG1, SG2) ein Klarspülgang (KG) ist.

3. Geschirrspülmaschine nach einem der vorstehenden Ansprüche, dadurch gekenntzeichnet, dass der vorletzte wasserführende Teilspülgang (ZG) des Spülgangs (SG1, SG2) ein Zwischenspülgang (ZG) und/oder ein Reinigungsgang (RG) ist.

4. Geschirrspülmaschine nach einem der vorstehenden Ansprüche, **dadurch gekennzeichnet, dass** bei wenigstens einem der Spülprogramme vorgesehen ist, die in der zweiten Kammer (30) gespeicherte Spülflotte (SZ) in einem ersten wasserführenden Teilspülgang (VG) des nachfolgenden Spülgangs (SG2) zum Beaufschlagen von Spülgut und die in der ersten Kammer (29) gespeicherte Spülflotte (SK) in einem späteren Teilspülgang (RG, ZG, KG) der wasserführenden Teilspülgänge (VG, RG, ZG, KG) des nachfolgenden Spülgangs (SG2) zum Beaufschlagen von Spülgut zu verwenden.

5. Geschirrspülmaschine nach Anspruch 4, **dadurch gekennzeichnet, dass** der erste wasserführende Teilspülgang (VG) des nachfolgenden Spülgangs (SG2) ein Vorspülgang (VG) und/oder ein Reinigungsgang (RG) ist, und dass der spätere Teilspülgang (RG, ZG, KG) der wasserführenden Teilspülgänge (VG, RG, ZG, KG) des nachfolgenden Spülgangs (SG2) ein Reinigungsgang (RG) und/oder ein Zwischenspülgang (ZG) ist.

6. Geschirrspülmaschine nach einem der Ansprüche 1 bis 3, dadurch gekenn-zeichnet, dass bei wenigstens einem der Spülprogramme vorgesehen ist, die in der ersten Kammer (29) gespeicherte Spülflotte (SK) und die in der zweiten Kammer (30) gespeicherte Spülflotte (SZ) in einem ersten wasserführenden Teilspülgang (VG) des nachfolgenden Spülgangs (SG2) zum Beaufschlagen von Spülgut zu verwenden.

7. Geschirrspülmaschine nach Anspruch 6, **dadurch gekennzeichnet, dass** der erste wasserführende Teilspülgang (VG) des nachfolgenden Spülgangs (SG2) ein Vorspülgang (VG) und/oder ein Reinigungsgang (RG) ist.

8. Geschirrspülmaschine nach einem der Ansprüche 1 bis 5, dadurch gekenn-zeichnet, dass eine Reinigungsmittelzugabeeinrichtung (33) zum Versetzen von Spülflotte (S, SK, SZ) mit Reinigungsmittel und eine davon getrennte Klarspülmittelzugabeeinrichtung (34) zum Versetzen von Spülflotte (S, SK, SZ) mit Klarspülmittel vorgesehen sind, wobei bei wenigstens einem der Spülprogramme vorgesehen ist, in dem nachfolgenden Spülgang (SG2), sofern die Klarspülmittelzugabeeinrichtung (34) nicht betriebsbereit ist, die in der ersten Kammer (29) gespeicherte Spülflotte (SK) in dem einem Klarspülgang (KG) unmittelbar vorangehenden Zwischenspülgang (ZG) zum Beaufschlagen von Spülgut zu verwenden, und, sofern die Klarspülmittelzugabeeinrichtung (34) betriebsbereit ist, die in der ersten Kammer (29) gespeicherte Spülflotte (SK) in dem einem Zwischenspülgang (ZG) vorangehenden Reinigungsgang (RG) zum Beaufschlagen von Spülgut zu verwenden.

9. Geschirrspülmaschine nach einem der vorstehenden Ansprüche, **dadurch gekennzeichnet, dass** die Speichereinrichtung (27) einen gemeinsamen Flottenspeicher (28) mit der ersten Kammer (29) und der zweiten Kammer (30) aufweist, wobei die erste Kammer (29) und die zweite Kammer (30) durch eine Trennwand (31) des gemeinsamen Flottenspeichers (28) getrennt sind.

10. Geschirrspülmaschine nach vorstehendem Anspruch, dadurch gekennzeich-net, dass der gemeinsame Flottenspeicher (28) ein Spritzgussteil, insbesondere aus Kunststoff, ist.

11. Geschirrspülmaschine nach einem der Ansprüche 1 bis 8, dadurch gekenn-zeichnet, dass die Speichereinrichtung einen ersten Flottenspeicher mit der ersten Kammer (29) und einen davon getrennten zweiten Flottenspeicher mit der zweiten Kammer (30) aufweist.

12. Geschirrspülmaschine nach vorstehendem Anspruch, dadurch gekennzeich-net, dass bei der Reinigungssequenz (RS1, RS2) vorgesehen ist, die erste Kammer (29) und die zweite Kammer (30) nacheinander mit derselben erwärmten Spülbadmenge zu reinigen.

13. Geschirrspülmaschine nach Anspruch 11 oder 12, **dadurch gekennzeichnet, dass** bei der Reinigungssequenz (RS1, RS2) vorgesehen ist, ausschließlich bereits zum Beaufschlagen von Spülgut verwendete Spülflotte (SK, SZ) zu nutzen.

14. Verfahren zum Betreiben einer Geschirrspülmaschine (1), insbesondere Haushaltsgeschirrspülmaschine (1), bei dem von einer Steuereinrichtung (2) mindestens ein Spülprogramm zum Steuern eines Spülgangs (SG1, SG2) zum Reinigen von Spülgut aufgerufen wird, wobei der Spülgang (SG1, SG2) mehrere wasserführende Teilspülgänge (VG, RG, ZG, KG) umfasst, bei denen das Spülgut jeweils mit Spülflotte (S, SK, SZ) beaufschlagt wird, wobei bei dem Spülgang (SG1, SG2) bereits zum Beaufschlagen von Spülgut verwendete Spülflotte (SK, SZ) in einer Speichereinrichtung (27) gespeichert wird, um die gespeicherte Spülflotte (SK, SZ) in einem nachfolgenden Spülgang (SG2) erneut zum Beaufschlagen von Spülgut zu verwenden, insbesondere nach mindestens einem der vorhergehenden Ansprüche, **dadurch gekennzeichnet, dass** bei wenigstens einem der Spülprogramme die in dem letzten wasserführenden Teilspülgang (KG) des Spülgangs (SG1) verwendete Spülflotte (SK) zumindest teilweise in einer ersten Kammer (29) der Speichereinrichtung (27) und die in einem vorletzten wasserführenden Teilspülgang des Spülgangs (SG1) verwendete Spülflotte (SZ) zumindest teilweise in einer zweiten Kammer (30) der Speichereinrichtung (27) gespeichert wird und dass bei wenigstens einem der Spülprogramme eine optionale, manuell oder automatisch aktivierbare Reinigungssequenz (RS1, RS2) vorgesehen ist, um die Speichereinrichtung (27) mittels beheizter Spülflotte (SK, SZ) zu reinigen.

## Claims

1. Dishwasher, in particular domestic dishwasher (1), having a control device (2), in which at least one wash program for controlling a wash cycle (SG1, SG2) for cleaning items to be washed can be selected, wherein the wash cycle (SG1, SG2) comprises a number of water-conducting sub-wash cycles (VG, RG, ZG, KG), in which the items to be washed are in each case applied with wash liquor (S, SZ, SK) and having a storage device (27) for storing wash liquor (SZ, SK) already used in the wash cycle (SG1, SG2) to be applied to the items to be washed, in order to use the stored wash liquor (SZ, SK) in a subsequent wash cycle (SG2) again to be applied to items to be washed, **characterised in that** provision is made with at least one of the wash programs to store the wash liquor (SK) used in a last water-conducting sub-wash cycle (KG) of the wash cycle (SG1, SG2) at least partially in a first chamber (29) of the storage device (27) and to store the wash liquor (SZ) used in a penultimate water-conducting sub-wash cycle (ZG) of the wash cycle (SG1, SG2) at least partially in a second chamber (30) of the storage device (27) which is delimited therefrom and that with at least one of the wash programs an optional, manually or automatically activatable cleaning sequence (RS1, RS2) is provided in order to clean the storage device (27) using heated wash liquor (SK, SZ).

2. Dishwasher according to the preceding claim, **characterised in that** the last water-conducting sub-wash cycle (KG) of the wash cycle (SG1, SG2) is a rinse-aid cycle (KG).

3. Dishwasher according to one of the preceding claims, **characterised in that** the penultimate water-conducting sub-wash cycle (ZG) of the wash cycle (SG1, SG2) is an intermediate wash cycle (ZG) and/or a cleaning cycle (RG).

4. Dishwasher according to one of the preceding claims, **characterised in that** with at least one of the wash programs provision is made to use the wash liquor (SZ) stored in the second chamber (30) in a first water-conducting sub-wash cycle (VG) of the subsequent wash cycle (SG2) to be applied to the items to be washed and to use the wash liquor (SK) stored in the first chamber (29) in a subsequent sub-wash cycle (RG, ZG, KG) of the water-conducting sub-wash cycles (VG, RG, ZG, KG) of the subsequent wash cycle (SG2) to be applied to the items to be washed.

5. Dishwasher according to claim 4, **characterised in that** the first water-conducting sub-wash cycle (VG) of the subsequent wash cycle (SG2) is a pre-wash cycle (VG) and/or a cleaning cycle (RG), and the subsequent sub-wash cycle (RG, ZG, KG) of the water-conducting sub-wash cycles (VG, RG, ZG, KG) of the subsequent wash cycle (SG2) is a cleaning cycle (RG) and/or an intermediate wash cycle (ZG).

6. Dishwasher according to one of claims 1 to 3, **characterised in that** with at least one of the wash programs, there is provision for the wash liquor (SK) stored in the first chamber (29) and the wash liquor (SZ) stored in the second chamber (30) to be used in a first water-conducting sub-wash cycle (VG) of the subsequent wash cycle (SG2) to be applied to the items to be washed.

7. Dishwasher according to claim 6, **characterised in that** the first water-conducting sub-wash cycle (VG) of the subsequent wash cycle (SG2) is a pre-wash cycle (VG) and/or a cleaning cycle (RG).

8. Dishwasher according to one of claims 1 to 5, **characterised in that** provision is made for a cleaning agent dispenser (33) for mixing wash liquor (S, SK, SZ) with detergent and for a rinse-aid dispenser (34), separated therefrom, for mixing wash liquor (S, SK, SZ) with rinse-aid, wherein with at least one of the wash programs, there is provision in the subsequent wash cycle (SG2), provided the rinse-aid dispenser (34) is not operational, to use the wash liquor (SK) stored in the first chamber (29) in the intermediate wash cycle (ZG), which immediately precedes a rinse-aid cycle (KG), to be applied to the items to be washed, and provided the rinse-aid dispenser (34) is operational, to use the wash liquor (SK) stored in the first chamber (29) in the cleaning cycle (RG), which precedes an intermediate wash cycle (ZG), to be applied to the items to be washed.

9. Dishwasher according to one of the preceding claims, **characterised in that** the storage device (27) has a shared wash liquor store (28) with the first chamber (29) and the second chamber (30), wherein the first chamber (29) and the second chamber (30) are separated by a separating wall (31) of the shared liquor store (28).

10. Dishwasher according to the preceding claim, **characterised in that** the shared liquor store (28) is an injection moulded part, in particular made from plastic.

11. Dishwasher according to one of claims 1 to 8, **characterised in that** the storage device has a first liquor store with the first chamber (29) and a second liquor store with the second chamber (30) which is separated therefrom.

12. Dishwasher according to the preceding claim, **characterised in that** provision is made with the cleaning sequence (RS1, RS2) to clean the first chamber (29) and the second chamber (30) one after the other with the same heated rinsing bath quantity.

13. Dishwasher according to claim 11 or 12, **characterised in that** provision is made with the cleaning sequence (RS1, RS2) to use wash liquor (SK, SZ) already exclusively used to be applied to items to be washed.

14. Method for operating a dishwasher (1), in particular domestic dishwasher (1), in which at least one wash program for controlling a wash cycle (SG1, SG2) for cleaning items to be washed is selected by a control device (2), wherein the wash cycle (SG1, SG2) comprises a number of water-conducting sub-wash cycles (VG, RG, ZG, KG), with which the items to be washed are each applied with wash liquor (S, SK, SZ), wherein with the wash cycle (SG1, SG2) wash liquor (SK, SZ) already used to be applied to the items to be washed is stored in a storage device (27), in order to use the stored wash liquor (SK, SZ) in a subsequent wash cycle (SG2) again to be applied to the items to be washed, in particular according to at least one of the preceding claims, **characterised in that** with at least one of the wash programs, the wash liquor (SK) used in the last water-conducting sub-wash cycle (KG) of the wash cycle (SG1) is stored at least partially in a first chamber (29) of the storage device (27) and the wash liquor (SZ) used in a penultimate water-conducting sub-wash cycle of the wash cycle (SG1) is stored at least partially in a second chamber (30) of the storage device (27) and that with at least one of the wash programs an optional, manually or automatically activatable cleaning sequence (RS 1, RS2) is provided in order to clean the storage device (27) using heated wash liquor (SK, SZ).

## Revendications

1. Machine à laver la vaisselle, en particulier machine à laver la vaisselle à usage ménager (1), avec un dispositif de commande (2) avec lequel au moins un programme de lavage peut être appelé pour la commande d'un cycle de lavage (SG1, SG2) pour le nettoyage d'articles à laver, dans laquelle le cycle de lavage (SG1, SG2) comporte plusieurs cycles de lavage partiels à circulation d'eau (VG, RG, ZG, KG) lors desquels les articles à laver sont soumis respectivement à l'action d'un bain de lavage (S, SZ, SK), et avec un dispositif de stockage (27) pour le stockage du bain de lavage (SZ, SK) déjà utilisé pour l'action sur des articles à laver lors du cycle de lavage (SG1, SG2), afin d'utiliser une nouvelle fois le bain de lavage stocké (SZ, SK) dans un cycle de lavage suivant (SG2) pour l'action sur des articles à laver, **caractérisée en ce que** lors d'au moins l'un des programmes de lavage, il est prévu de stocker le bain de lavage (SK) utilisé dans un dernier cycle de lavage partiel à circulation d'eau (KG) du cycle de lavage (SG1, SG2) au moins en partie dans une première chambre (29) du dispositif de stockage (27) et le bain de lavage (SZ) utilisé dans un avant-dernier cycle de lavage partiel à circulation d'eau (ZG) du cycle de lavage (SG1, SG2) au moins en partie dans une deuxième chambre (30) délimitée de celle-ci du dispositif de stockage (27), et **en ce que** lors d'au moins l'un des programmes de lavage, il est prévu une séquence de nettoyage facultative activable manuellement ou automatiquement (RS1, RS2) afin de nettoyer le dispositif de stockage (27) au moyen de bain de lavage (SK, SZ) chauffé.

2. Machine à laver la vaisselle selon la revendication précédente, **caractérisée en ce que** le dernier cycle de lavage partiel à circulation d'eau (KG) du cycle de lavage (SG1, SG2) est un cycle de rinçage (KG).

3. Machine à laver la vaisselle selon l'une des revendications précédentes, **caractérisée en ce que** l'avant-dernier cycle de lavage partiel à circulation d'eau (ZG) du cycle de lavage (SG1, SG2) est un cycle de lavage intermédiaire (ZG) et/ou un cycle de nettoyage (RG).

4. Machine à laver la vaisselle selon l'une des revendications précédentes, **caractérisée en ce que** lors d'au moins l'un des programmes de lavage, il est prévu d'utiliser le bain de lavage (SZ) stocké dans la deuxième chambre (30) dans un premier cycle de lavage partiel à circulation d'eau (VG) du cycle de lavage suivant (SG2) pour l'action sur des articles à laver et le bain de lavage (SK) stocké dans la première chambre (29) dans un cycle de lavage partiel ultérieur (RG, ZG, KG) des cycles de lavage partiels à circulation d'eau (VG, RG, ZG, KG) du cycle de lavage suivant (SG2) pour l'action sur des articles à laver.

5. Machine à laver la vaisselle selon la revendication 4, **caractérisée en ce que** le premier cycle de lavage partiel à circulation d'eau (VG) du cycle de lavage suivant (SG2) est un cycle de prélavage (VG) et/ou un cycle de nettoyage (RG), et **en ce que** le cycle de lavage partiel ultérieur (RG, ZG, KG) des cycles de lavage partiels à circulation d'eau (VG, RG, ZG, KG) du cycle de lavage suivant (SG2) est un cycle de nettoyage (RG) et/ou un cycle de lavage intermédiaire (ZG).

6. Machine à laver la vaisselle selon l'une des revendications 1 à 3, **caractérisée en ce que** lors d'au moins l'un des programmes de lavage, il est prévu d'utiliser le bain de lavage (SK) stocké dans la première chambre (29) et le bain de lavage (SZ) stocké dans la deuxième chambre (30) dans un premier cycle de lavage partiel à circulation d'eau (VG) du cycle de lavage suivant (SG2) pour l'action sur des articles à laver.

7. Machine à laver la vaisselle selon la revendication 6, **caractérisée en ce que** le premier cycle de lavage partiel à circulation d'eau (VG) du cycle de lavage suivant (SG2) est un cycle de prélavage (VG) et/ou un cycle de nettoyage (RG).

8. Machine à laver la vaisselle selon l'une des revendications 1 à 5, **caractérisée en ce qu'**un dispositif d'apport de produit de nettoyage (33) pour le mélange de bain de lavage (S, SK, SZ) avec du produit de nettoyage et un dispositif d'apport de produit de rinçage (34) séparé de celui-ci pour le mélange de bain de lavage (S, SK, SZ) avec du produit de rinçage sont prévus, dans laquelle lors d'au moins l'un des programmes de lavage, il est prévu, dans le cycle de lavage suivant (SG2), si le dispositif d'apport de produit de rinçage (34) n'est pas opérationnel, d'utiliser le bain de lavage (SK) stocké dans la première chambre (29) dans le cycle de lavage intermédiaire (ZG) précédant immédiatement un cycle de rinçage (KG) pour l'action sur des articles à laver, et, si le dispositif d'apport de produit de rinçage (34) est opérationnel, d'utiliser le bain de lavage (SK) stocké dans la première chambre (29) dans le cycle de nettoyage (RG) précédant un cycle de lavage intermédiaire (ZG) pour l'action sur des articles à laver.

9. Machine à laver la vaisselle selon l'une des revendications précédentes, **caractérisée en ce que** le dispositif de stockage (27) comprend un réservoir à bain commun (28) avec la première chambre (29) et la deuxième chambre (30), dans laquelle la première chambre (29) et la deuxième chambre (30) sont séparées par une paroi de séparation (31) du réservoir à bain commun (28).

10. Machine à laver la vaisselle selon la revendication précédente, **caractérisée en ce que** le réservoir à bain commun (28) est une pièce moulée par injection, en particulier en matière plastique.

11. Machine à laver la vaisselle selon l'une des revendications 1 à 8, **caractérisée en ce que** le dispositif de stockage comprend un premier réservoir à bain avec la première chambre (29) et un deuxième réservoir à bain séparé de celui-ci avec la deuxième chambre (30).

12. Machine à laver la vaisselle selon la revendication précédente, **caractérisée en ce que** lors de la séquence de nettoyage (RS1, RS2), il est prévu de nettoyer la première chambre (29) et la deuxième chambre (30) l'une après l'autre avec la même quantité de bain de lavage chauffée.

13. Machine à laver la vaisselle selon la revendication 11 ou la revendication 12, **caractérisée en ce que** lors de la séquence de nettoyage (RS1, RS2), il est prévu d'utiliser exclusivement le bain de lavage (SK, SZ) déjà utilisé pour l'action sur des articles à laver.

14. Procédé de fonctionnement d'une machine à laver la vaisselle (1), en particulier d'une machine à laver la vaisselle à usage ménager (1), dans lequel au moins un programme de lavage est appelé par un dispositif de commande (2) pour la commande d'un cycle de lavage (SG1, SG2) pour le nettoyage d'articles à laver, dans lequel le cycle de lavage (SG1, SG2) comporte plusieurs cycles de lavage partiels à circulation d'eau (VG, RG, ZG, KG), lors desquels les articles à laver sont soumis respectivement à l'action d'un bain de lavage (S, SK, SZ), dans lequel le bain de lavage (SK, SZ) déjà utilisé pour l'action sur des articles à laver lors du cycle de lavage (SG1, SG2) est stocké dans un dispositif de stockage (27), afin d'utiliser une nouvelle fois le bain de lavage stocké (SK, SZ) dans un cycle de lavage suivant (SG2) pour l'action sur des articles à laver, en particulier selon au moins l'une des revendications précédentes, **caractérisé en ce que** lors d'au moins l'un des programmes de lavage, le bain de lavage (SK) utilisé dans le dernier cycle de lavage partiel à circulation d'eau (KG) du cycle de lavage (SG1) est stocké au moins en partie dans une première chambre (29) du dispositif de stockage (27) et le bain de lavage (SZ) utilisé dans un avant-dernier cycle de lavage partiel à circulation d'eau du cycle de lavage (SG1) est stocké au moins en partie dans une deuxième chambre (30) du dispositif de stockage (27), et **en ce que** lors d'au moins l'un des programmes de lavage, il est prévu une séquence de nettoyage facultative activable manuellement ou automatiquement (RS1, RS2) afin de nettoyer le dispositif de stockage (27) au moyen de bain de lavage (SK, SZ) chauffé.
